# EUROPÄISCHE PATENTSCHRIFT

(11) **EP 0 705 031 B1**
(45) Veröffentlichungstag und Bekanntmachung des Hinweises auf die Patenterteilung: **19.06.2002**
(21) Anmeldenummer: 95115095.2
(22) Anmeldetag: 25.09.1995
(51) Int. Cl.: H04N 5/44

(54) **Verfahren und Schaltungsanordung zur Flimmerreduktion für ein Gerät zur Videosignalverarbeitung**
Method and circuit for reducing flicker for a video signal processing apparatus
Procédé et circuit pour réduire le scintillement pour un dispositif de traitement signal vidéo

(30) Priorität: 28.09.1994 DE 4434728
(43) Veröffentlichungstag der Anmeldung: 03.04.1996
(73) Patentinhaber: Micronas Munich GmbH, 81541 München (DE)
(72) Erfinder: Blume, Holger, Dipl.-Ing., D-44793 Bochum (DE); Zygis, Krzysztof, PL-71-669 Szczecin (PL); Schwörer, Ludwig, Dipl.-Ing., D-44143 Dortmund (DE)
(74) Vertreter: Patentanwälte Westphal, Mussgnug & Partner

(56) Entgegenhaltungen:
- EP-A- 0 339 365
- EP-A- 0 496 451
- EP-A- 0 554 495
- DE-A- 4 220 662

## Beschreibung

Die Erfindung betrifft ein Verfahren zur Flimmerreduktion für ein Gerät zum Verarbeiten von in Zeilen aufgeteilten Videosignalen, bei dem ein eingangsseitig zuführbares Videosignal eine Folge von Halbbildern mit Zeilensprung aufweist, die abwechselnd ein Halbbild mit einem ersten Zeilenraster und ein Halbbild mit einem zweiten Zeilenraster umfaßt, auf den im Videosignal enthaltenen hochfrequenten Signalanteil eine im wesentlichen flimmerbefreiend wirkende Umsetzung auf Halbbilder mit verdoppelter Halbbildrate durchgeführt wird, auf den im Videosignal enthaltenen niederfrequenten Signalanteil eine im wesentlichen bewegungsrichtige wirkende Umsetzung auf Halbbilder mit verdoppelter Halbbildrate durchgeführt wird, und die auf die doppelte Halbbildrate umgesetzten Halbbilder der hochfrequenten und niederfrequenten Signalanteile zusammengefaßt werden.

Die Erfindung betrifft außerdem eine Schaltungsanordnung zur Durchführung des Verfahrens.

Bekanntlich wird bei der Fernsehsignalübertragung eine Folge von Halbbildern übertragen, die einen Zeilensprung aufweisen. Aus diesen Halbbildern wird im Fernsehgerät ein Bild mit doppelter Zeilenzahl erzeugt, in dem die Halbbilder nacheinander zeilenverkämmt mit der empfangenen Halbbildrate wiedergegeben werden. Wegen der Trägheit des menschlichen Auges sieht der Betrachter das Vollbild. Ein auf die bloße Halbbildwiedergabe gestütztes Darstellungsverfahren hat eine Reihe von Nachteilen. Dazu gehören beispielsweise das Flackern von Kanten, das Flackern von größeren homogenen Flächen oder das Zeilenwandern, bei dem besonders bei vertikal langsam bewegten, homogenen Gegenständen die Zeilenstruktur eines Halbbilds sichtbar wird. Zur Vermeidung dieser Nachteile ist bekanntlich vorgesehen, die Wiedergaberate der Halbbilder zu verdoppeln.

In der europäischen Patentanmeldung EP 0 339 365 ist ein Verfahren zur Flimmerreduktion bei einem Fernsehgerät beschrieben, bei dem das Videosignal in einen Höhen- und Tiefensignalanteil aufgetrennt wird. Auf die Höhen- und Tiefensignalanteile wird eine unterschiedliche Signalverarbeitung angewandt. Der Höhensignalanteil wird zu einer im wesentlichen flimmerbefreiten Halbbildfolge mit doppelter Halbbildrate umgesetzt, der Tiefensignalanteil auf eine im wesentlichen bewegungsrichtig darstellende Halbbildfolge. Die Umsteuerung zwischen den Signalverarbeitungspfaden wird unter Verwendung eines Bewegungsdetektors bewegungsadaptiv durchgeführt.

In der europäischen Offenlegungsschrift EP 0 554 495 ist ein Verfahren zur Flimmerreduktion für ein Fernsehgerät beschrieben, bei dem zur Umsetzung auf die doppelte Halbbildwiedergaberate der Bildinhalt eines Halbbilds mittels Bewegungsvektoren auf den Wiedergabezeitpunkt umgerechnet wird.

Die bekannten Verfahren benötigen einen Bewegungsvektor, der in Bezug auf Betrag und Richtung vorliegen muß. Die Ermittlung eines solchen Bewegungsvektors ist aber relativ aufwendig. Außerdem erfordern die unter Verwendung des Bewegungsvektors durchzuführenden Signalverarbeitungmaßnahmen einen relativ hohen Rechenaufwand.

In der DE-A1-42 20 662 sind ein Verfahren und eine Vorrichtung zur Bildwechselfrequenz-Verdopplung in Fernsehgeräten beschrieben. Es wird eine symmetrische Doppel-Medianfilterung durchgeführt, um progressive, interpolierte Halbbilder mit einfacher Bildwechselfrequenz zu erhalten. Unter Anwendung von temporaler Mittelwertbildung werden progressive Halbbilder mit doppelter Bildwechselfrequenz erzeugt. Zeilenverkämmte Halbbilder mit doppelter Bildwechselfrequenz werden dann durch Überspringen von Zeilen abgeleitet.

In der EP-A1-0 496 451 ist eine Aufwärtskonversion von Fernsehbildsignalen auf doppelte Bildwiederholfrequenz unter Anwendung von Medianfiltern beschrieben. Zuerst wird die Bildpunktfrequenz verdoppelt. Anschließend werden gerade und ungerade Abtastwerte in getrennten Medianfiltern weiterverarbeitet. Ausgangsseitig erfolgt eine Unterabtastung.

Die Aufgabe der Erfindung besteht darin, ein Verfahren zur Flimmerreduktion für ein Videosignalverarbeitungsgerät der eingangs genannten Art weiterzubilden, das eine möglichst flimmerbefreite und bewegungsrichtige Bildwiedergabe ermöglicht. Die Ausführung des Verfahrens sowie dessen Realisierung soll mit möglichst geringem Aufwand durchführbar sein. Insbesondere soll die Bildung eines Bewegungsvektors vermieden werden.

Eine weitere Aufgabe besteht in der Angabe einer Schaltungsanordnung zur Durchführung des Verfahrens.

Die Aufgabe wird betreffend das Verfahren dadurch gelöst, daß für die Umsetzung des hochfrequenten Signalanteils eine im wesentlichen zeitlich wirkende Medianfilterung und für die Umsetzung des niedrigfrequenten Signalanteils eine zentral gewichtete Medianfilterung durchgeführt werden, indem für die Umsetzung der hochfrequenten und niederfrequenten Signalanteile Zwischenhalbbilder erzeugt werden, die in die Folge zwischen den eingangsseitigen Halbbildern eingefügt werden, und für die Umsetzung der Halbbilder des hochfrequenten und niedrigfrequenten Signalanteils jeweils eine Folge von Halbbildern mit abwechselnd dem ersten und dem zweiten Zeilenraster erzeugt wird, von denen ein erstes Halbbild durch direkte Übernahme eines der eingangsseitigen Halbbilder, ein zweites durch eine erste Medianbildungsvorschrift aus mehreren der eingangsseitige Halbbilder, ein drittes durch eine Zeilenrasterumsetzung und ein viertes durch eine zweite andere Medianbildungsvorschrift aus mehreren der eingangsseitigen Halbbilder erzeugt werden.

Eine Schaltungsanordnung zur Durchführung des Verfahrens ist in Patentanspruch 6 angegeben.

Beim erfindungsgemäßen Verfahren werden zur Erzeugung von Zwischenbildern Mediantechniken verwendet. Ein im wesentlichen zeitlich wirkendes Medianfilter im Höhenkanal sorgt für eine Flimmerbefreiung der hochfrequenten Signalanteile. Mittels eines zentral gewichteten Medianfilters im Tiefenkanal werden die Zwischenbilder bewegungsrichtig erzeugt. Das entsprechende Medianfilter sorgt insbesondere dafür, daß eine vertikale Kante einer bewegten Struktur im Zwischenbild in etwa in der Mitte der dargestellten Bewegungsphasen der eingangsseitigen Halbbilder erzeugt wird. Eine schmale bewegte Struktur, z. B. eine vertikale Linie, wird im Zwischenbild nicht dargestellt. Dadurch wird vermieden, daß Doppelkonturen bei sehr schmalen Strukturen auftreten, die vom Betrachter als äußerst störend empfunden würden. Zwar wird dann das Flackern von schmalen, horizontal bewegten Details durch die Auslöschung in den Zwischenbilder nicht reduziert. Dafür wird aber eine bewegungsrichtige Darstellung ohne Stufenstrukturen und Doppelkonturen dieser Details ermöglicht. Somit ergibt sich für den Betrachter für das gesamte Bild eine Flimmerbefreiung bei bewegungsrichtiger Darstellung.

Bei Medianfiltern werden bekanntlich die Eingangswerte in Bezug auf ein Vergleichskriterium, z. B. dem Helligkeitswert, der Reihe nach geordnet. Zur Weiterverarbeitung wird ein Bildpunkt an einer vorbestimmten Lage der geordneten Reihenfolge ausgewertet. Die Realisierung derartiger Medianfilter ist bekanntlich mit herkömmlichen Schaltungstechniken relativ einfach möglich.

Nachfolgend wird die Erfindung anhand der in der Zeichnung dargestellten Figuren näher erläutert. Es zeigen:
- Figur 1: ein Prinzipschaltbild eines Videosignalverarbeitungsgeräts, das eine erfindungsgemaße Schaltungsanordnung enthält,
- Figur 2: das Zugriffsschema der Medianfilterungen im Höhenkanal,
- Figur 3: der prinzipielle Verfahrensablauf im Tiefenkanal,
- Figur 4: das Zugriffsschema der Medianfilterung für die Zwischenbilderzeugung im Tiefenkanal.

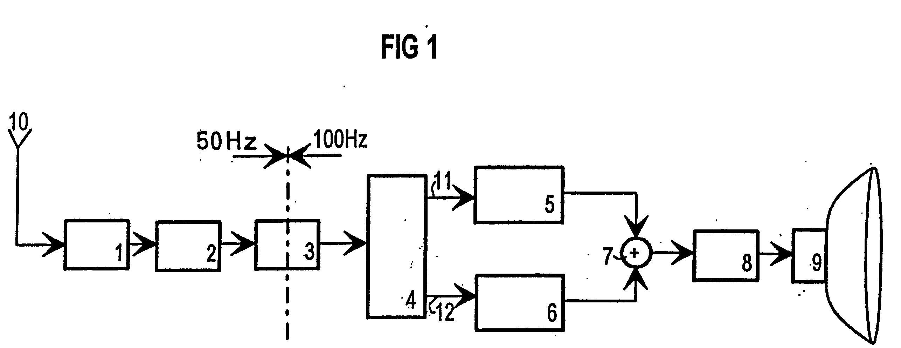

Einem Fernsehgerät gemäß Figur 1 wird über eine Antenne 10 ein Fernsehsignal zugeführt. Das Frequenzband des eingestellten Senders wird über einen Tuner 1 selektiert. Durch eine ZF- und Demodulatorstufe 2 wird der eingestellte Sender zuerst auf die Zwischenfrequenz, dann ins Basisband umgesetzt. Das eingangsseitige Videosignal im Basisband enthält eine Folge von Halbbildern mit Zeilensprung A1, B1, A2, B2, ... Das Halbbild A1 enhält beispielsweise die ungeradzahligen Zeilen eines Vollbilds, das Halbbild B1 die geradzahligen Zeilen. Der Abstand zwischen zwei Halbbildern beträgt 20 ms. Die Halbbildwechselfrequenz beträgt demnach 50 Hz.

Die empfangenen Halbbilder werden in einem Bildspeicher 3 zwischengespeichert. Zur Umsetzung auf eine Halbbildfolge mit verdoppelter Halbbildwiedergaberate (100 Hz) werden die im Bildspeicher 3 gespeicherten Bilder mit verdoppelter Zeilenfrequenz ausgelesen. Die Halbbilder werden dann einem vertikalen Trennfilter zugeführt, welches das Videosignal in Bezug auf seine vertikalen Höhen- und Tiefensignalanteile trennt. Am Ausgang 11 für den hochfrequenten Signalanteil liegt eine Halbbildfolge an, die den in Bezug auf die Ortsfrequenz vertikalen Höhensignalanteil enthält. Entsprechend liegt am Ausgang 12 eine Halbbildfolge mit dem niedrigfrequenten Signalanteil vor. Höhen- und Tiefensignalanteile werden unterschiedlich verarbeitet.

In einer Einrichtung 5 für den Höhenkanal wird eine Umsetzung derart durchgeführt, daß Zwischenbilder erzeugt werden, deren Bildpunkte durch eine zeitlich wirkende Medianfilterung erzeugt werden. Dies bedeutet, daß die Eingangsbildpunkte der Medianfilter im wesentlichen aus zeitlich versetzt liegenden Halbbildern im Bereich um den neu zu·bildenen Bildpunkt herum entnommen werden. Im Tiefenkanal liegt eine Einrichtung 6, die zur Bildung der Zwischenbilder eine im wesentlichen bewegungsrichtig wirkende Medianfilterung ausführt. Hierbei werden einem Medianfilter in der Bewegungsphase aufeinanderfolgende, entsprechende Bildpunkte zugeführt. Das Medianfilter wirkt derart, daß das Zwischenbild bewegungsrichtig erzeugt wird.

Höhen- und Tiefenkanal werden in einer Additionsschaltung 7 wieder zusammengeführt. Aus den am Ausgang des Addierers 7 anliegenden Helligkeits- und Farbdifferenzsignalen werden in einem Bildprozessor 8 die entsprechenden zur Ansteuerung einer Bildröhre 9 geeigneten RGB-Signale erzeugt. Im Fernsehgerät sind darüber hinaus (nicht dargestellt) Verarbeitungseinrichtungen zur Aufbereitung von Horizontal- und Vertikalablenkimpulsen vorhanden, an die die Taktsteuerung der Bildverarbeitung im Bildspeicher 3 und der Einrichtungen 4...7 gekoppelt ist und die zur Ansteuerung der Ablenkeinrichtungen der Bildröhre 9 dienen.

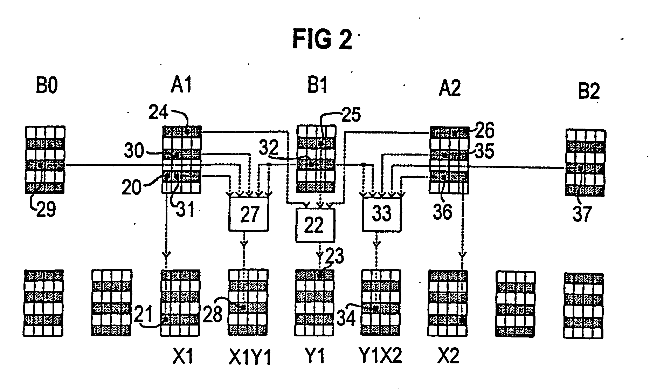

Die Erzeugung der Halbbildfolge mit verdoppelter Halbbildfrequenz in der Einrichtung 5 ist ausgehend von den eingangsseitig eingespeisten Halbbildern für den Höhenkanal in Figur 2 dargestellt. Der dargestellte Abschnitt der Eingangshalbbildfolge umfaßt den Höhensignalanteil der Halbbilder B0, A1, B1, A2, B2. Die Halbbilder A1, A2 enthalten die ungeradzahligen Zeilen und sind in der Rasterlage α dargestellt. Die Halbbilder B0, B1, B2 enthalten die geradzahligen Zeilen und sind in der Rasterlage β dargestellt. Die Folge der Ausgangshalbbilder weist abwechselnd die Rasterlagen α, β auf. Zur Erzeugung der Ausgangshalbbildfolge mit verdoppelter Halbbildfrequenz werden die Halbbilder A1, A2 direkt als Ausgangshalbbilder X1 bzw. X2 übernommen. Die Rasterlage wird nicht verändert. So wird zum Beispiel der Bildpunkt 20 des Halbbilds A1 in den Bildpunkt 21 des Halbbilds X1 übernommen. Aus dem Halbbild B1 wird durch Umsetzung seiner Rasterlage β das Halbbild Y1 mit Rasterlage α erzeugt. Beispielsweise wird der Bildpunkt 23 des Halbbilds Y1 durch eine Medianbildungsvorschrift 22 aus den Bildpunkten 24, 25, 26 der Halbbilder A1 bzw. B1 bzw. A2 gebildet. Der Bildpunkt 25 des Halbbilds B1 liegt benachbart zum Bildpunkt 23 des Halbbilds Y1 in der darunter liegenden Zeile. Die Bildpunkte 24, 26 liegen an den dem Bildpunkt 23 entsprechenden Bildpunktstellen der Halbbilder A1, A2. Die Halbbilder A1, A2 liegen dabei in der Bewegungsphase vor bzw. nach dem zu erzeugenden Halbbild Y1, während das Halbbild B1 die gleiche Bewegungsphase aufweist. Bei der Medianbildungsvorschrift 22 werden in bekannter Weise die Eingangsbildpunkte 24, 25, 26 der Größe nach (Helligkeitswert) geordnet. Der mittlere Wert wird als neuer Bildpunkt 23 übernommen.

Das zwischen den Ausgangshalbbildern X1, Y1 liegende Zwischenhalbbild X1Y1 wird nach einer Medianbildungsvorschrift 27 berechnet, die eine im wesentlichen zeitlich wirkende Filterung ausführt. Ein im Zwischenhalbbild X1Y1 zu erzeugender Bildpunkt 28 wird als Median berechnet aus den Bildpunkten 29 des Halbbilds B0, den Bildpunkten 30, 31 des Halbbilds A1 und in zweifacher Gewichtung des Bildpunkts 32 des Halbbilds B1. Dabei liegen die Bildpunkte 29, 32 an der dem Bildpunkt 28 entsprechenden Stelle in den in der Bewegungsphase vorhergehenden und nachfolgenden Halbbilder gleicher Rasterlage. Die Bildpunkte 30, 31 liegen in der jeweils darüber bzw. darunter liegenden Zeile des in der Bewegungsphase vorhergehenden Halbbildes der anderen Rasterlage benachbart. Da durch die Medianbildungsvorschrift 27 Bildpunkte von drei zeitversetzten Halbbildern ausgewertet werden, liegt ein im wesentlichen zeitlich wirkendes Medianfilter vor.

Ein Bildpunkt 34 im Zwischenbild Y1X2 zwischen den beiden Halbbildern Y1, X2 wird durch eine Medianbildungsvorschrift 33 erzeugt. Dem Medianfilter 33 werden die dem Medianfilter 27 entsprechenden Bildpunkte zugeführt, wobei diese einen zeitlich umgekehrten Bezug im Vergleich zum Zwischenbild Y1X1 aufweisen. Dies bedeutet, daß dem Medianfilter 33 der Bildpunkt 32 des Halbbilds B1 mit: doppelter Gewichtung zugeführt wird und außerdem die Bildpunkte 35, 36 des Halbbilds A2 in unmittelbarer Nachbarschaft in der darüber und darunter liegenden Zeile und der Bildpunkt 37 des Halbbilds B2 an der gleichen Bildpunktstelle.

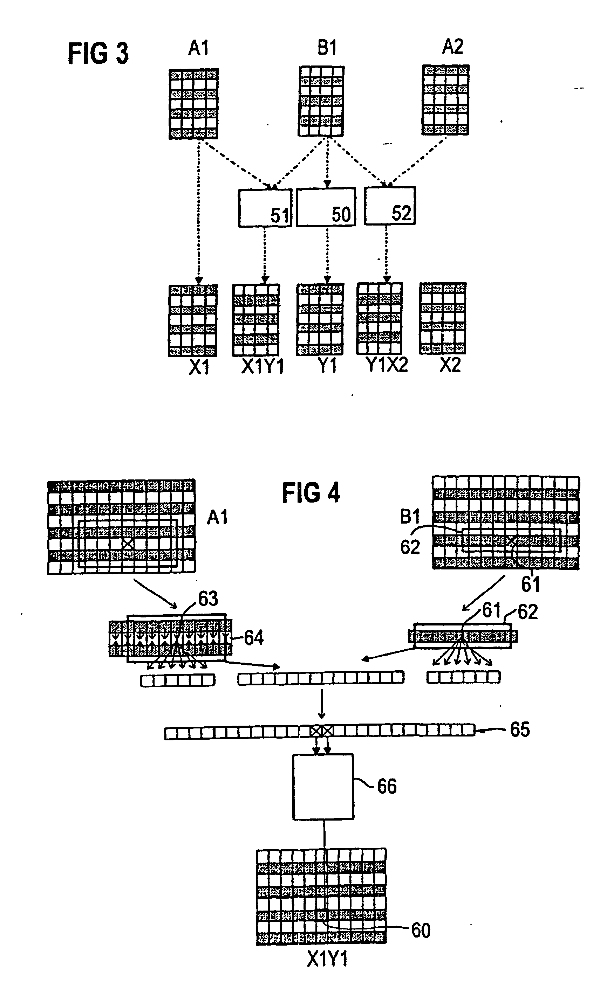

Die für den Tiefenkanal vorgesehene Verarbeitung zur Erzeugung einer Halbbildfolge mit verdoppelter Halbbildrate, durch die eine im wesentlichen bewegungsrichtige Umsetzung gewährleistet ist, ist im Prinzip in Figur 3 gezeigt. Die Eingangshalbbilder A1, B1, A2 im Abstand von 20 ms enthalten die vertikalen Tiefensignalanteile des eingangsseitig eingespeisten Videosignals. Ausgangsseitig wird das Halbbild X1 direkt vom Halbbild A1 übernommen. Das Halbbild Y1 wird von der Rasterlage β des Halbbilds B1 durch eine Umsetzungsvorschrift 50 auf das Halbbild Y1 mit Rasterlage α umgesetzt. Die bewegungsrichtig zu erzeugenden Zwischenhalbbilder X1Y1 und Y1X2 werden durch je eine Medianfilterung 51 bzw. 52 aus den in der Bewegungsphase jeweils unmittelbar vorher und unmittelbar nachher folgenden Eingangshalbbildern berechnet. Die Halbbilder der Ausgangshalbbildfolge weisen wieder abwechselnd die Rasterlagen α und β auf.

Die Rasterlagenumsetzung des Halbbilds B1 auf das Halbbild Y1 wird in Form einer linearen Interpolation ausgeführt. Zweckmäßigerweise wird der arithmetische Mittelwert aus denjenigen beiden Werten gebildet, die dem neu zu erzeugenden Bildpunkt des Halbbilds Y1 im Halbbild B1 in der darunter und darüber liegenden Zeile unmittelbar benachbart liegen.

Ein detailliertes Diagramm zur Veranschaulichung der Medianbildungsvorschrift 51 ist in Figur 4 gezeigt. Beispielsweise ist im Zwischenhalbbild X1Y1 der Bildpunkt 60 in Rasterlage β zu berechnen. Hierzu wird im Halbbild B1 der gleichen Rasterlage der der Bildpunktstelle 60 entsprechende Bildpunkt 61 ausgewählt. Zur Medianbildung wird sowohl der Bildpunkt 60 in mehrfacher Gewichtung als auch ein Bereich 62 von jeweils drei dem Bildpunkt 61 unmittelbar vorher und nachher folgenden Bildpunkten berücksichtigt. Entsprechendes wird im Halbbild A1 an der Bildpunktstelle 63 ausgeführt, wobei vorher eine Rasterlagenumsetzung auf β-Rasterlage mittels einer Interpolation durchgeführt wird. Zur Medianbildung werden dann der dem Bildpunkt 60 entsprechende interpolierte Bildpunkt 63 sowie der Bereich 64 herangezogen, der den Bildpunkt 63 und die in der gleichen interpolierten Zeile unmittelbar vorher und nachher folgenden jeweils drei Bildpunkte enthält. Die Bildpunkte 61, 63 werden außerdem jeweils 6-fach gewichtet. Die Bereiche 64 und 62 werden in einfacher Gewichtung verwendet. Durch das Medianfilter werden also insgesamt 26 Bildpunkte ausgewertet. Diese Bildpunkte werden der Größe nach geordnet, was im Verfahrensschritt 65 dargestellt ist. Aus den beiden mittleren Werten wird ein Mittelwert, vorzugsweise ein arithmetischer Mittelwert 66 gebildet. Dieser Wert wird als zu erzeugender Bildpunkt 60 im Zwischenbild X1Y1 übernommen.

Durch die Medianbildungsvorschrift 51 bzw. 52 zur Erzeugung des Zwischenbildes Y1X2 wird ein zentral gewichteter Median berechnet. Jeder zentrale Bildpunkt, das heißt derjenige Wert, der der Bildpunktstelle des zu erzeugenden Bildpunkts 60 im zu erzeugenden Zwischenbild X1Y1 in den Ausgangshalbbildern A1, B1 entspricht, geht insgesamt mit 7-facher Gewichtung in das Medianfilter ein. Dadurch wird erreicht, daß sich bei periodischen Bildstrukturen keine unerwünschten Anteile ergeben. Es bleiben still stehende schmale oder periodische Strukturen bei der Bildung des Zwischenbildes erhalten, während bewegte schmale Strukturen im Zwischenbild nicht dargestellt werden.

Diese bewegten schmalen Strukturen bewegen sich von einem Halbbild zum nächsten Halbbild aus dem Bereich des zentralen Bildpunkts heraus, so daß sie bei der Medianbildung (Figur 4) für eines der eingangsseitigen Halbbilder nicht berücksichtigt werden. Beispielsweise steht eine schmale Struktur (dunkle senkrechte Linie von der Breite eines Bildpunktes in horizontaler Richtung) beim ersten Halbbild im zentralen Bildpunkt. Im zweiten Halbbild liegt sie wegen der fortschreitenden Bewegung außerhalb des zentralen Bildpunkts. Nach der Medianbildungsvorschrift ergibt sich für das Zwischenbild dann ein heller Bildpunkt. Für eine solche bewegte schmale Struktur ergibt sich eine geringere Flimmerbefreiung, die aber für den Betrachter wesentlich weniger störend ist als eine möglicherweise an einer fehlerhaften Stelle erzeugte Struktur im Zwischenbild.

Bei Helligkeitskanten, zum Beispiel bei bewegten flächenhaften Strukturen, wird die für das Zwischenbild zu erzeugende Helligkeitskante in der Mitte der beiden Ausgangshalbbilder erzeugt. Beispielsweise wird bei einer Horizontalbewegung einer Helligkeitskante (Hell-Dunkel-Übergang) um sechs Bildpunkte in horizontale Richtung nach rechts im neu zu erzeugenden Zwischenbild bis zur Mittenposition, d. h. bis drei Bildpunkte nach rechts von der Lage der Helligkeitskante des ersten Halbbilds entfernt, ein heller Bildpunkt erzeugt, von dort an ein dunkler Bildpunkt

## Patentansprüche

1. Verfahren zur Flimmerreduktion für ein Gerät zum Verarbeiten von in Zeilen aufgeteilten Videosignalen, bei dem
- ein eingangsseitig zuführbares Videosignal eine Folge von Halbbildern mit Zeilensprung aufweist, die abwechselnd ein Halbbild mit einem ersten Zeilenraster (α) und ein Halbbild mit einem zweiten Zeilenraster (β) umfaßt,
- auf den im Videosignal enthaltenen hochfrequenten Signalanteil eine im wesentlichen flimmerbefreiend wirkende Umsetzung auf Halbbilder mit verdoppelter Halbbildrate durchgeführt wird,
- auf den im Videosignal enthaltenen niederfrequenten Signalanteil eine im wesentlichen bewegungsrichtige wirkende Umsetzung auf Halbbilder mit verdoppelter Halbbildrate durchgeführt wird, und
- die auf die doppelte Halbbildrate umgesetzten Halbbilder der hochfrequenten und niederfrequenten Signalanteile zusammengefaßt werden,
**dadurch gekennzeichnet, daß**
für die Umsetzung des hochfrequenten Signalanteils eine im wesentlichen zeitlich wirkende Medianfilterung und für die Umsetzung des niedrigfrequenten Signalanteils eine zentral gewichtete Medianfilterung durchgeführt werden, indem für die Umsetzung der hochfrequenten und niederfrequenten Signalanteile Zwischenhalbbilder erzeugt werden, die in die Folge zwischen den eingangsseitigen Halbbildern eingefügt werden, und für die Umsetzung der Halbbilder des hochfrequenten und niedrigfrequenten Signalanteils jeweils eine Folge von Halbbildern mit abwechselnd dem ersten und dem zweiten Zeilenraster (αβαβ) erzeugt wird, von denen ein erstes Halbbild (X1) durch direkte Übernahme eines der eingangsseitigen Halbbilder, ein zweites (X1Y1) durch eine erste Medianbildungsvorschrift (27, 51) aus mehreren der eingangsseitigen Halbbilder, ein drittes (Y1) durch eine Zeilenrasterumsetzung (22, 50) und ein viertes (Y1X2) durch eine zweite andere Median bildungsvorschrift (33, 52) aus mehreren der eingangsseitigen Halbbilder erzeugt werden.

2. Verfahren nach Anspruch 1,
**dadurch gekennzeichnet, daß**
zur Umsetzung der eingangsseitigen Halbbilder mit dem hochfrequenten Signalanteil gemäß der ersten Medianbildungsvorschrift (27) ein an einer Bildpunktstelle zu erzeugender Bildpunkt (28) als Median gebildet wird aus:
- dem Bildpunkt (29) an der gleichen Bildpunktstelle des vorhergenden Halbbilds (B0) gleichen Zeilenrasters,
- den benachbarten Bildpunkten (30, 31) in der darüber und darunter liegenden Zeile der Bildpunktstelle des vorhergehenden Halbbild (A1) des anderen Zeilenrasters, und
- dem Bildpunkt (32) an der gleichen Bildpunktstelle des nachfolgenden Halbbilds (B1) gleichen Zeilenrasters mit mindestens doppelter Gewichtung,
daß gemäß der Zeilenrasterumsetzung (22) ein an einer Bildpunktstelle zu erzeugender Bildpunkt (23) als Median gebildet wird aus:
- dem benachbarten Bildpunkt (25) in der darunter liegenden Zeile der Bildpunktstelle des umzusetzenden Halbbilds (B1) gleichen Zeilenrasters,
- den Bildpunkten (24, 26) an der gleichen Bildpunktstelle der vor- und nachfolgenden Halbbilder (A1, A2) des gleichen Zeilenrasters, und daß gemäß der zweiten Medianbildungsvorschrift (33) ein an einer Bildpunktstelle zu erzeugender Bildpunkt (34) als Median gebildet wird aus:
- dem Bildpunkt (32) an der gleichen Bildpunktstelle des vorhergenden Halbbilds (B1) gleichen Zeilenrasters mit mindestens doppelter Gewichtung,
- den benachbarten Bildpunkten (35, 36) in der darüber und darunter liegenden Zeile der Bildpunktstelle des nachfolgenden Halbbilds (A2) des anderen Zeilenrasters, und
- dem Bildpunkt (37) an der gleichen Bildpunktstelle des nachfolgenden Halbbilds (B2) gleichen Zeilenrasters.

3. Verfahren nach Anspruch 1 oder 2,
**dadurch gekennzeichnet, daß**
zur Umsetzung der eingangsseitigen Halbbilder mit dem niedrigfrequenten Signalanteil gemäß der ersten und zweiten Medianbildungsvorschrift (51, 52) ein an einer Bildpunktstelle zu erzeugender Bildpunkt (60) als Median gebildet wird aus:
- Bildpunkten in einem die gleiche Bildpunktstelle (63) enthaltenden Bereich (64) des durch Interpolation auf das gleiche Zeilenraster umgesetzten vorhergehenden Halbbildes (A1) des anderen Zeilenrasters, und
- Bildpunkten einem die gleiche Bildpunktstelle (61) enthaltenden Bereich (62) des nachfolgenden Halbbilds (B1) des gleichen Zeilenrasters und daß
gemäß zur Zeilenrasterumsetzung (50) eine lineare Interpolation (50) durchgeführt wird.

4. Verfahren nach Anspruch 3,
**dadurch gekennzeichnet, daß**
die Bildpunkte in den Bereichen (62, 64) der eingangsseitigen Halbbilder an der gleichen Bildpunktstelle (61, 63) mehrfach gewichtet werden.

5. Verfahren nach Anspruch 3 oder 4,
**dadurch gekennzeichnet, daß**
die Bildpunkte an der gleichen Bildpunktstelle des durch Interpolation erzeugten vorhergenden Halbbilds (A1) und des nachfolgenden Halbbilds (B1) jeweils in der Mitte der Bereiche (64, 62) liegen, daß die Bereiche jeweils 7 Bildpunkte umfassen, daß gemäß der ersten und zweiten Medianbildungsvorschrift (51, 52) die Bildpunkte der Bereiche (64, 62) zweifach und die mittleren Bildpunkte (63, 61) jeweils sechsfach gewichtet werden, daß diese Bildpunkte der Reihe nach geordnet werden, daß die beiden in der Mitte der geordneten Reihe liegenden Bildpunkte ausgewählt werden und daß daraus der zu erzeugende Bildpunkt (60) durch lineare Mittelwertbildung ermittelt wird.

6. Schaltungsanordnung zur Durchführung des Verfahrens nach einem der Ansprüche 1 bis 5,
**gekennzeichnet durch**
- eine Bildspeichereinrichtung (3) zur Speicherung der eingangsseitig zugeführten Halbbilder eines ersten und eines zweiten Zeilenrasters (α, β), der das Videosignal zuführbar ist und aus der die Halbbilder mit verdoppelter Halbbildrate auslesbar sind,
- ein Trennfilter (4) zur Aufteilung in Halbbilder mit hochfrequenten und niedrigfrequenten Signalanteilen,
- eine erste Umsetzungseinrichtung (5), der der hochfrequente Signalanteil zuführbar ist und die eine im wesentlichen zeitlich wirkende Medianfilterung ausführt,
- eine zweite Umsetzungseinrichtung (6), der der niedrigfrequente Signalanteil zuführbar ist und die eine im wesentlichen bewegungsrichtige Medianfilterung ausführt, wobei
- die ersten und die zweite Umsetzungseinrichtungen (5, 6) derart ausgebildet sind, daß Zwischenhalbbilder erzeugbar sind, die in die Folge zwischen den eingangsseitigen Halbbildern eingefügt werden, und
- jeweils eine Folge von Halbbildern mit abwechselnd dem ersten und dem zweiten Zeilenraster (αβαβ) erzeugbar ist, von denen ein erstes Halbbild (X1) **durch** direkte Übernahme eines der eingangsseitigen Halbbilder, ein zweites (X1Y1) **durch** eine erste Medianbildungsvorschrift (27, 51) aus mehreren der eingangsseitigen Halbbilder, ein drittes (Y1) **durch** eine Zeilenrasterumsetzung (22, 50) und ein viertes (Y1X2) **durch** eine zweite andere Medianbildungsvorschrift (33, 52) aus mehreren der eingangsseitigen Halbbilder erzeugbar sind.

## Claims

1. A method for reducing flicker for an apparatus for processing video signals divided into lines, in which
- a video signal which can be supplied at the input side comprises a sequence of fields with line skip, which alternately contains a field with a first line grid (α) and a field with a second line grid (β),
- a conversion to fields with double field rate, which substantially acts to eliminate flicker, is performed on the high frequency signal component contained in the video signal,
- a conversion to fields with doubled field rate, which substantially acts correct as to motion, is performed on the low-frequency signal component contained in the video signal, and
- the fields converted to the double field rate of the high frequency and low frequency signal components are combined,
**characterised in that** a substantially chronologically acting median filtering is carried out for the conversion of the high-frequency signal component and a centrally weighted median filtering is carried out for the conversion of the low-frequency signal component by intermediate fields which are inserted into the sequence between the input-side fields being produced for the conversion of the high-frequency and low-frequency signal components, and in each case a sequence of fields with alternatingly the first and the second line grid (αβαβ) is produced for the conversion of the fields of the high-frequency and low-frequency signal component, of which a first field (X1) is produced by directly importing one of the input-side fields, a second field (X1Y1) is produced by a first median formation regulation (27, 51) from several of the input-side fields, a third field (Y1) is produced by a line grid conversion (22, 50) and a fourth field (Y1X2) is produced by a second other median formation regulation (33, 52) from several of the input-side fields.

2. A method according to Claim 1,
**characterised in that** for the conversion of the input-side fields with the high-frequency signal component, in accordance with the first median formation regulation (27) a picture element (28) to be produced at a picture element site is formed as a median from:
- the picture element (29) at the same picture element site of the preceding field (B0) of the same line grid,
- the adjacent picture elements (30, 31) in the line of the picture element site of the preceding field (A1) of the other line grid which lies above and beneath them, and
- the picture element (32) at the same picture element site of the following field (B1) of the same line grid with at least double weighting,
**in that** in accordance with the line grid conversion (22) a picture element (23) to be,produced at a picture element site is formed as a median from:
- the adjacent picture element (25) in the line of the picture element site of the field (B1) to be converted which lies beneath it,
- the picture elements (24, 26) at the same picture element site of the preceding and following fields (A1, A2) of the same line grid,
**and in that** in accordance with the second median formation regulation (33) a picture element (34) to be produced at a picture element site is formed as a median from:
- the picture element (32) at the same picture element site of the preceding field (B1) of the same line grid with at least double weighting,
- the adjacent picture elements (35, 36) in the line of the picture element site of the following field (A2) of the other line grid which lies above and below them, and
- the picture element (37) at the same picture element site of the following field (B2) of the same line grid.

3. A method according to Claim 1 or 2,
**characterised in that** for the conversion of the input-side fields with the low-frequency signal component according to the first and second median formation regulation (51, 52) a picture element (60) to be produced at a picture element site is formed as a median from:
- picture elements in an area (64), containing the same picture element site (63), of the preceding field (A1), converted by interpolation to the same line grid, of the other line grid, and
- picture elements (in) an area (62), containing the same picture element site (61), of the following field (B1) of the same line grid
**and in that** in accordance with the line grid conversion (50) a linear interpolation (50) is carried out.

4. A method according to Claim 3,
**characterised in that** the picture elements are multiply-weighted in the areas (62, 64) of the input-side fields at the same picture element site (61, 63).

5. A method according to Claim 3 or 4,
**characterised in that** the picture elements lie at the same picture element site of the preceding field (A1) produced by interpolation and of the following field (B1) in each case in the centre of the areas (64, 62),
**in that** the areas each contain 7 picture elements,
**in that** according to the first and second median formation regulation (51, 52) the picture elements of the areas (64, 62) are are weighted by a factor of two and the middle picture elements (63, 61) are in each case weighted by a factor of six,
**in that** these picture elements are organised in sequence,
**in that** the two picture elements lying in the middle of the ordered sequence are selected
**and in that** from them the picture element (60) to be produced is determined by linear averaging.

6. A circuit arrangement for performing the method according to one of Claims 1 to 5,
**characterised by**
- an image storage device (3) for storing the fields, supplied on the input side, of a first and of a second line grid (α, β) to which the video signal can be supplied and from which the fields can be read out with a doubled field rate,
- a separating filter (4) for division into fields with high-frequency and low-frequency signal components,
- a first conversion device (5), to which the high-frequency signal component can be supplied and which performs a substantially chronologically acting median filtering,
- a second conversion device (6), to which the low-frequency signal component can be supplied and which performs a substantially motion-correct median filtering, in which
- the first and the second conversion devices (5, 6) are constructed in such a manner that intermediate fields can be produced which are inserted into the sequence between the input-side fields, and
- in each case a sequence of fields with alternately the first and the second line grid (αβαβ) can be produced, of which a first field (X1) can be produced by directly importing one of the input-side fields, a second field (X1Y1) can be produced by a first median formation regulation (27, 51) from several of the input-side fields, a third field (Y1) can be produced by a line grid conversion (22, 50) and a fourth field (Y1X2) can be produced by a second other median formation regulation (33, 52) from several of the input-side fields.

## Revendications

1. Procédé de réduction du scintillement appliqué à un appareil de traitement de signaux vidéos répartis en lignes, selon lequel
un signal vidéo appliqué à l'entrée présente une suite de demi-images ou trames avec des sauts de lignes, comprenant en alternance une trame avec un premier tramage de lignes (α) et une trame avec un second tramage de lignes (β),
sur la partie de signal haute fréquence contenue dans le signal vidéo on effectue une conversion essentiellement pour éliminer le scintillement de la trame avec une vitesse de trame doublée,
- sur la partie de signal basse fréquence contenue dans le signal vidéo on effectue une conversion agissant essentiellement avec un mouvement correct sur les trames avec une fréquence de trame double, et on regroupe les trames converties à une fréquence de trame double des parties de signal à haute fréquence et basse fréquence,
**caractérisé en ce que**
pour la conversion de la partie de signal haute fréquence on effectue un filtrage médian agissant essentiellement dans le temps et pour la conversion de la partie de signal basse fréquence, un filtrage médian à pondération centrale, en générant pour la conversion des parties de signal haute et basse fréquence, des trames intermédiaires introduites dans la suite entre les trames d'entrée, et
pour la conversion des trames de la partie de signal haute fréquence et de la partie de signal basse fréquence, on génère chaque fois une suite de trames avec une alternance adaptée aux trames des premier et second tramages de lignes (αβαβ), à partir desquels on génère une première trame (X1) par reprise directe d'une trame d'entrée, une seconde trame (X1Y1) par une première prescription de formation de valeur médiane (27, 51) à partir de plusieurs trames d'entrée, une troisième trame (Y1) par une conversion de tramage de lignes (22, 50) et une quatrième trame (Y1X2) par une seconde autre prescription de formation de valeur médiane (33, 52) à partir de plusieurs trames d'entrée.

2. Procédé de réduction du scintillement selon la revendication 1,
**caractérisé en ce que**
par conversion des trames d'entrée avec la partie de signal haute fréquence, selon la première prescription de formation de valeur médiane (27), on forme un point image (28) à créer au niveau d'un emplacement de point image comme valeur médiane à partir :
- du point image (29) au même emplacement de point image que la trame précédente (B0) de même tramage de ligne,
- des points images voisins (30, 31) dans la ligne située au-dessus et en dessous de l'emplacement du point image de la trame précédente (A1) de l'autre tramage de lignes, et
- du point image (32), au même emplacement de point image de la trame suivante (B1) du même tramage de lignes avec au moins une pondération double,
selon la conversion de tramage de lignes (22) on forme comme valeur médiane, un point image (23) créé au niveau d'un emplacement de point image à partir :
- du point image voisin (25) dans la ligne de l'emplacement de point image situé en dessous de la trame (B1) à convertir avec le même tramage de lignes,
- les points images (24, 26) aux mêmes emplacements de point image des trames précédentes et suivantes (A1, A2) de même tramage de lignes,
et selon la seconde prescription de formation de valeur médiane (33), on forme comme valeur médiane, un point image (34) à réaliser au même emplacement de point image en utilisant :
- le point image (32) au même emplacement de point image de la trame précédente (B1) avec le même tramage de lignes et une pondération au moins double,
- les points images voisins (35, 36) dans la ligne située au-dessus et la ligne située en dessous de l'emplacement de point image de la trame suivante (A2) de l'autre tramage de lignes, et
- le point image (37) au même point image de la trame suivante (B2) avec le même tramage de lignes.

3. Procédé de réduction du scintillement selon la revendication 1 ou 2,
**caractérisé en ce que**
pour convertir les trames d'entrée avec une partie de signal basse fréquence selon la première et la seconde prescription de formation de valeur médiane (51, 52), on forme comme valeur médiane un point image (B60) à générer, en utilisant :
- des points images dans une zone (64) contenant le même emplacement de point image (63) de la trame (A1) de l'autre tramage de lignes, précédemment transformé par interpolation dans le même tramage de lignes,
- les points images d'une zone (62) contenant les mêmes emplacements de point image (61) dans la trame suivante (B1) du même tramage de lignes, et
- suivant la conversion de tramage de lignes (50), on effectue une interpolation linéaire (50).

4. Procédé de réduction du scintillement selon la revendication 3,
**caractérisé en ce que**
l'on pondère plusieurs fois les points images dans les zones (62, 64) des trames du côté de l'entrée au niveau des mêmes points images (61, 63).

5. Procédé de réduction du scintillement selon la revendication 3 ou 4,
**caractérisé en ce que**
les points images se trouvent au même emplacement de points images de la trame (A1) précédente générée par interpolation et la trame suivante (B1) chaque fois au niveau des zones (64, 62), les zones comprennent chaque fois 7 points images, selon la première et la seconde prescription de formation de valeur médiane (51, 52) on pondère deux fois les points images des zones (64, 62), et les points images intermédiaires (63, 61) chaque fois six fois, et ces points images sont classés dans l'ordre, on sélectionne les deux points images situés au milieu de la rangée ordonnée et à partir de là, on détermine le point image (60) à générer en formant une valeur moyenne linéaire.

6. Circuit pour la mise en oeuvre du procédé selon l'une des revendications 1 à 5,
**caractérisé par**
- une mémoire d'images (3) pour enregistrer les trames appliquées à l'entrée d'un premier et d'un second tramage de lignes (α, β), cette installation recevant le signal vidéo pour en lire les trames avec une vitesse de trame double,
- un filtre de séparation (4) pour répartir en trame les composants de signal basse fréquence et haute fréquence,
- une première installation de conversion (5) qui est appliquée à la partie de signal haute fréquence et effectue un filtrage médian agissant essentiellement dans le temps,
- une seconde installation de conversion (6) qui reçoit la partie de signal basse fréquence et effectue un filtrage médian essentiellement correct pour le mouvement,
- la première et la seconde installation de conversion (5,6) étant réalisées pour générer des trames qui seront insérées dans la suite entre les trames du côté de l'entrée, et
- pour générer chaque fois une suite de trames avec un premier et un second tramage de lignes (αβαβ) parmi lesquels une première trame (X1) correspond à une reprise directe d'unes trame appliquée à l'entrée, une seconde trame (X1Y1) s'obtient par une première prescription de formation de valeur médiane (27, 51) à partir de plusieurs des trames appliquées à l'entrée, une troisième trame (Y1) par une conversion de tramage de lignes (22, 50) et une quatrième trame (Y1X2) par une seconde prescription pour la formation. d'une autre valeur médiane (33, 52) à partir des trames appliquées à l'entrée.
